(19) Europäisches Patentamt / European Patent Office / Office européen des brevets

(11) **EP 4 482 795 B1**

(12) **EUROPEAN PATENT SPECIFICATION**


(45) Date of publication and mention of the grant of the patent:
**05.11.2025 Bulletin 2025/45**

(21) Application number: **23703609.0**

(22) Date of filing: **13.02.2023**

(51) International Patent Classification (IPC):
***C01G 53/00*** *(2025.01)* ***H01M 4/00*** *(2006.01)*

(52) Cooperative Patent Classification (CPC):
**C01G 53/50; C01G 53/54; H01M 4/131; H01M 4/1391; H01M 4/505; H01M 4/525; H01M 10/0525;** C01P 2004/04; C01P 2004/61; C01P 2004/80; C01P 2006/12; Y02E 60/10

(86) International application number:
**PCT/EP2023/053438**

(87) International publication number:
**WO 2023/161048 (31.08.2023 Gazette 2023/35)**


(54) **PROCESS FOR MAKING A COATED ELECTRODE ACTIVE MATERIAL, AND COATED ELECTRODE ACTIVE MATERIAL**

VERFAHREN ZUR HERSTELLUNG EINES BESCHICHTETEN ELEKTRODENAKTIVMATERIALS SOWIE BESCHICHTETES ELEKTRODENAKTIVMATERIAL

PROCÉDÉ DE FABRICATION D'UN MATÉRIAU ACTIF DE CATHODE REVÊTU ET MATÉRIAU ACTIF DE CATHODE REVÊTU


(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.02.2022 EP 22157879**

(43) Date of publication of application:
**01.01.2025 Bulletin 2025/01**



(73) Proprietor: **BASF SE**
**67056 Ludwigshafen am Rhein (DE)**

(72) Inventors:
- **PHAM, Quang Hieu**
  **5232 Villigen PSI (CH)**
- **TRABESINGER, Sigita**
  **5232 Villigen PSI (CH)**
- **KONDRAKOV, Aleksandr**
  **67056 Ludwigshafen am Rhein (DE)**

(74) Representative: **BASF IP Association**
**BASF SE**
**GBI - Z078**
**67056 Ludwigshafen (DE)**



(56) References cited:
- **LEE YONGHO ET AL: "Coating of spinel LiNi0.5Mn1.5O4 cathodes with SnO2 by an electron cyclotron resonance metal-organic chemical vapor deposition method for high-voltage applications in lithium ion batteries", JOURNAL OF ELECTROANALYTICAL CHEMISTRY, vol. 736, 1 January 2015 (2015-01-01), AMSTERDAM, NL, pages 16 - 21, XP055948631, ISSN: 1572-6657, DOI: 10.1016/j.jelechem.2014.10.022**
- **MA FENG ET AL: "Facile synthesis and characterization of a SnO 2 -modified LiNi 0.5 Mn 1.5 O 4 high-voltage cathode material with superior electrochemical performance for lithium ion batteries", PHYSICAL CHEMISTRY CHEMICAL PHYSICS, vol. 19, no. 15, 1 January 2017 (2017-01-01), pages 9983 - 9991, XP055948651, ISSN: 1463-9076, DOI: 10.1039/C7CP00943G**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 4 482 795 B1

## Description

The present invention is directed towards a process for the manufacture of a coated cathode active material comprising the steps of

(a) providing a particulate electrode active material according to general formula $Li_{1+x}TM_{1-x}O_2$, wherein TM is a combination of metals comprising Ni and Mn, and, optionally, at least one element selected from Al, Mg, transition metals other than Ni and Mn, and x is in the range of from zero to 0.2, wherein at least 50 mole-% of the metal of TM is Mn,
(b) treating said particulate electrode active material with an aqueous solution of at least one salt of $Sn^{2+}$,
(c) removing the water, thereby obtaining a solid residue,
(d) treating the residue obtained from step (c) thermally.

In addition, the present invention is directed towards certain coated cathode active materials.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.

Many electrode active materials discussed today are of the type of lithiated nickel-cobalt-manganese oxide ("NCM materials") or lithiated nickel-cobalt-aluminum oxide ("NCA materials").

In a typical process for making cathode materials for lithium-ion batteries, first a so-called precursor is being formed by co-precipitating the transition metals as carbonates, oxides or preferably as (oxy)hydroxides. The precursor is then mixed with a lithium compound such as, but not limited to LiOH, $Li_2O$ or $Li_2CO_3$ and calcined (fired) at high temperatures. Lithium compound(s) can be employed as hydrate(s) or in dehydrated form. The calcination - or firing - generally also referred to as thermal treatment or heat treatment of the precursor - is usually carried out at temperatures in the range of from 600 to 1,000 °C. In cases hydroxides or carbonates are used as precursors a removal of water or carbon dioxide occurs first and is followed by the lithi-ation reaction. The thermal treatment is performed in the heating zone of an oven or kiln.

Extensive research has been performed on improvement of various properties of cathode active materials, such as energy density, charge-discharge performance such as capacity fading, and the like. However, many cathode active materials suffer from limited cycle life and voltage fade. This applies particularly to many Mn-rich cathode active materials.

In EP 3 486 980, specific high-manganese materials with a high energy density retention rate are disclosed. However, the cathode active materials disclosed suffer from a limited energy density as such. MA FENG ET AL: "Facile synthesis and characterization of a SnO 2 -modified LiNi 0.5 Mn 1.5 O 4 high-voltage cathode material with superior electrochemical performance for lithium ion batteries",PHYSICAL CHEMISTRY CHEMICAL PHYSICS, vol. 19, no. 15, 1 January 2017 (2017-01-01), pages 9983-9991, discloses LiNi0.5Mn1.5O4 cathode active material having a SnO2 coating.

It has been observed, though, that high-manganese materials suffer from Mn leaching in the course of repeated cycling. An increased manganese content may then be detected in the electrolyte and on the anode. A continued leaching of manganese may lead to deterioration of the anode protective layer, also known as the solid electrolyte interface causing parasitic consumption of active lithium and ultimately loss in reversible (cyclable) capacity and cell failure.

It was therefore an objective of the present invention to provide electrochemical cells with high-high energy density retention rate but a reduced tendency of capacity fade due to manganese leaching.

Accordingly, the process as defined at the outset has been found, hereinafter also referred to as inventive process or as process according to the (present) invention. The inventive process comprises step (a), step (b), step (c) and step (d). Step (a) may also be referred to as (a). Step (b) may also be referred to as (b). Step (c) may hereinafter also be referred to as (c). Step (d) may also be referred to as (d).

In step (a), a particulate electrode active material is material according to general formula $Li_{1+x}TM_{1-x}O_2$ is provided wherein TM is a combination of metals comprising Ni and Mn, and, optionally, at least one element selected from Al, Mg, transition metals other than Ni and Mn, and x is in the range of from 0.1 to 0.2, wherein at least 50 mole-% of the metal of TM is Mn, preferably 50 to 85 mole-%.

In one embodiment of the present invention the particulate electrode particulate material provided in step (a) has an average particle diameter (D50) in the range of from 3 to 20 μm, preferably from 5 to 16 μm. The average particle diameter can be determined, e. g., by light scattering or LASER diffraction. The particles are usually composed of agglomerates from primary particles, and the above particle diameter refers to the secondary particle diameter.

In one embodiment of the present invention, the particulate electrode particulate material provided in step (a) has a specific surface, hereinafter also "BET surface" in the range of from 1.0 to 10.0 $m^2/g$. The BET surface may be determined by nitrogen adsorption after outgassing of the sample at 200 °C for 30 minutes or more and beyond this accordance with DIN ISO 9277:2010.

In the context of the present invention, particulate electrode materials provided in step (a) include so-called lithium rich materials with a layered structure, general formula $Li_{1+x}TM_{1-x}O_2$ wherein x is in the range of from zero to 0.35, preferably 0.12 to 0.20, and TM includes two or more transition metals, and at least 50 mol-% is Mn, preferably 50 to 85 mol-%of TM is Mn, preferably 60 to 70 mol-%.

In a preferred embodiment of the resent invention, TM in particulate electrode materials provided in step (a) is a combination of elements of the general formula (I)

$$(Ni_aCo_bMn_c)_{1-d}M^1_d \qquad (I)$$

wherein

a is in the range of from 0.20 to 0.40, preferably 0.25 to 0.35,
b is in the range of from zero or in the range of from 0.01 to 0.20, preferably zero or 0.05 to 0.15,
c is in the range of from 0.50 to 0.85, preferably from 0.60 to 0.70, and
d is in the range of from zero to 0.02,
$M^1$ is selected from Al, Ti, Zr, W, Mo, Mg, and Nb, and combinations of at least two of the foregoing, and

$$a + b + c = 1.$$

Preferably, a > b.

Particulate electrode materials provided in step (a) may be coated or non-coated, preferably they are non-coated.

Some metals are ubiquitous such as sodium, calcium or zinc and traces of them are virtually present everywhere, but such traces will not be taken into account in the description of the present invention. Traces in this context will mean amounts of 0.02 mol-% or less, referring to the total metal content TM.

In step (b), said particulate electrode active material provided in step (a) is treated with an aqueous solution of at least one salt of $Sn^{2+}$, for example $SnSO_4$.

Said aqueous solution may have a concentration of Sn in the range of from 0.1 to 3 % by weight, preferably 0.3 to 1 % by weight.

In one embodiment of the present invention, said treatment is effected by combining said aqueous solution with the particulate electrode active material provided in step (a) and allowing them to interact with each other.

In one embodiment of the present invention, the volume ratio of aqueous solutions containing Sn salt versus electrode active material provided in step (a) ranges from 30:1 to 20:1.

Step (b) may be supported by mixing operations like stirring, shaking, and sonification under stirring.

In one embodiment of the present invention, step (b) is performed at a temperature in the range of from +5 to 85°C, preferred are 20 to 50°C.

The pressure under which step (b) is performed is generally not critical. Ambient pressure is preferred.

In one embodiment of the present invention, step (b) has a duration in the range of from one to 24 hours.

Step (c) includes removing the water, thereby obtaining a solid residue. The water may be performed by a solid-liquid separation method, for example filtration or by way of a centrifuge, or by evaporation of the water, evaporation being preferred.

In one embodiment of the present invention, step (b) is performed in the same vessel as step (c), for example on a stirred suction filter (German "Rührfilternutsche"), and 1 to 5 minutes after combination of electrode active material provided in step (a) and aqueous solution of salt of $Sn^{2+}$, filtration is commenced.

Evaporation of the water may be performed at a temperature in the range of from 60 to 150°C, preferably 80 to 120°C. Said evaporation may be performed over a duration in the range of from 1 to 72 hours.

Evaporation of water may be supported by performing step (c) at reduced pressure, for example 1 to 500 mbar (abs), preferably 2 to 100 mbar (abs).

From step (c), a solid residue is obtained. Preferably, said solid residue has the appearance of a moist powder.

In one embodiment of the present invention, step (d) is performed at a temperature in the range of from 400 to 750°C, preferably 450 to 550°C.

In one embodiment of the present invention, the temperature is ramped up before reaching the desired temperature of from 400 to 750°C, preferably 450 to 550°C. For example, first the solid residue of step (c) is heated to a temperature to 250 to 350°C and then held constant for a time of 10 min to 4 hours, and then it is raised to 400 to 750°C and held constant for a time of 10 min to 14 hours.

In one embodiment of the present invention, the heating rate in step (d) is in the range of from 0.1 to 10 °C/min.

In one embodiment of the present invention, step (d) is performed in a roller hearth kiln, a pusher kiln or a rotary kiln or in a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces as well as muffle ovens are feasible as well.

In one embodiment of the present invention, step (d) is performed in an oxygen-containing atmosphere, for example in a nitrogen-air mixture, in a rare gas-oxygen mixture, in air, in oxygen or in oxygen-enriched air. In a preferred embodiment, the atmosphere in step (b) is selected from air, oxygen and oxygen-enriched air. Oxygen-enriched air may be, for example, a 50:50 by volume mix of air and oxygen. Other options are 1:2 by volume mixtures of air and oxygen, 1:3 by volume mixtures of air and oxygen, 2:1 by volume mixtures of air and oxygen, and 3:1 by volume mixtures of air and oxygen.

In other embodiments, step (d) is carried out under an atmosphere of inert gas, for example nitrogen.

In one embodiment of the present invention, step (d) is carried out under an atmosphere with reduced $CO_2$ content, e.g., a carbon dioxide content in the range of from 0.01 to 500 ppm by weight, preferred are 0.1 to 50 ppm by weight. The $CO_2$ content may be determined by, e.g., optical methods using infrared light. It is even more preferred to perform step (c) under an atmosphere with a carbon dioxide content below detection limit for example with infrared-light based optical methods.

In one embodiment of the present invention, step (d) has a duration in the range of from one hour to 30 hours. Preferred are 60 minutes to 6 hours. The cooling time is neglected in this context.

After thermal treatment in accordance with step (d), the coated electrode active material so obtained is cooled down before further processing.

Inventive cathode active materials may be obtained by the inventive process. Without wishing to be bound by any theory, it is assumed that upon thermal treatment, $SO_2$ is cleaved off and the $Sn^{2+}$ is oxidized to Sn(+IV), for example as $SnO_2$. Due to environmental concerns, it is preferred to capture said $SO_2$.

Inventive cathode active materials display excellent properties especially with respect to cycling stability and low capacity fade.

A further aspect relates to specific cathode active materials, hereinafter also referred to as inventive cathode active materials. Inventive cathode active materials are particulate materials that have a core according to general formula $LiNi_{0.5}Mn_{1.5}O_4$, doped or non doped, or to $Li_{1+x}TM_{1-x}O_2$ wherein TM is a combination of metals comprising Ni and Mn, and, optionally, at least one element selected from Al, Mg, transition metals other than Ni and Mn, and x is in the range of from zero to 0.35, wherein at least 50 mole-% of the metal of TM is Mn, and a shell comprising $SnO_2$. In a special embodiment, the shell is $SnO_2$.

In the context of the present invention, inventive cathode active materials include so-called lithium rich materials with a layered structure, corresponding to general formula $Li_{1+x}TM_{1-x}O_2$ wherein x is in the range of from zero to 0.35, preferably 0.12 to 0.20, and TM includes two or more transition metals, and at least 50 mol-% is Mn, preferably 50 to 85 mol-%of TM is Mn, preferably 60 to 70 mol-%. Inventive cathode active materials additionally have a shell comprising $SnO_2$.

In one embodiment of the present invention, TM in $Li_{1+x}TM_{1-x}O_2$ is a combination of metals according to general formula (I)

$$(Ni_aCo_bMn_c)_{1-d}M_d \qquad (I)$$

with

a in the range of from 0.20 to 0.40, preferably 0.25 to 0.35,
b in the range of from zero or in the range of from 0.01 to 0.20, preferably zero or 0.05 to 0.15,
c in the range of from 0.50 to 0.85, preferably from 0.60 to 0.70, and
d being in the range of from zero to 0.02,
M is at least one of Al, Mg, Ti, Mo, W, Nb and Zr, and

$$a + b + c = 1.$$

In one embodiment of present invention, inventive cathode active material has an average particle diameter (d50) in the range of from 3 to 20 μm.

In one embodiment of present invention, the shell in inventive cathode active material has a thickness in the range of from 5 to 10 nm. The thickness may be determined by transmission electron microscopy ("TEM").

A further aspect of the present invention refers to electrodes comprising at least one electrode active material according to the present invention. They are particularly useful for lithium ion batteries. Lithium ion batteries comprising at

least one electrode according to the present invention exhibit a good discharge behavior. Electrodes comprising at least one electrode active material according to the present invention are hereinafter also referred to as inventive cathodes or cathodes according to the present invention.

Specifically, inventive cathodes contain

(A) at least one inventive cathode active material,
(B) carbon in electrically conductive form,
(C) a binder polymer, also referred to as binder or binder (C), and, preferably,
(D) a current collector.

In a preferred embodiment, inventive cathodes contain

(A) 80 to 98 % by weight inventive cathode active material,
(B) 1 to 17 % by weight of carbon,
(C) 1 to 15 % by weight of binder polymer,

percentages referring to the sum of (A), (B) and (C).

Cathodes according to the present invention can comprise further components. They can comprise a current collector, such as, but not limited to, an aluminum foil. They can further comprise conductive carbon and a binder.

Cathodes according to the present invention contain carbon in electrically conductive modification, in brief also referred to as carbon (B). Carbon (B) can be selected from soot, active carbon, carbon nanotubes, graphene, and graphite, and from combinations of at least two of the foregoing.

Suitable binders (C) are preferably selected from organic (co)polymers. Suitable (co)polymers, i.e., homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopoly-ethylene, but also copolymers of ethylene which comprise at least 50 mol-% of copolymerized ethylene and up to 50 mol-% of at least one further comonomer, for example α-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl acetate, vinyl propionate, $C_1$-$C_{10}$-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol-% of copolymerized propylene and up to 50 mol-% of at least one further comonomer, for example ethylene and α-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, $C_1$-$C_{10}$-alkyl esters of (meth)acrylic acid, divinylbenzene, especially 1,3-divinylbenzene, 1,2-diphenylethylene and α-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an average molecular weight $M_w$ in the range from 50,000 to 1,000,000 g/mol, preferably to 500,000 g/mol.

Binder (C) may be selected from cross-linked or non-cross-linked (co)polymers.

In a particularly preferred embodiment of the present invention, binder (C) is selected from halogenated (co) polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene

copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

Inventive cathodes may comprise 1 to 15% by weight of binder(s), referring to electrode active material. In other embodiments, inventive cathodes may comprise 0.1 up to less than 1% by weight of binder(s).

A further aspect of the present invention is a battery, containing at least one cathode comprising inventive electrode active material, carbon, and binder, at least one anode, and at least one electrolyte.

Embodiments of inventive cathodes have been described above in detail.

Said anode may contain at least one anode active material, such as carbon (graphite), $TiO_2$, lithium titanium oxide, silicon or tin. Said anode may additionally contain a current collector, for example a metal foil such as a copper foil.

Said electrolyte may comprise at least one non-aqueous solvent, at least one electrolyte salt and, optionally, additives.

Non-aqueous solvents for electrolytes can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-$C_1$-$C_4$-alkylene glycols and in particular polyethylene glycols. Polyethylene glycols can here comprise up to 20 mol-% of one or more $C_1$-$C_4$-alkylene glycols. Polyalkylene glycols are preferably polyalkylene glycols having two methyl or ethyl end caps.

The molecular weight $M_w$ of suitable polyalkylene glycols and in particular suitable polyethylene glycols can be at least 400 g/mol.

The molecular weight $M_w$ of suitable polyalkylene glycols and in particular suitable polyethylene glycols can be up to 5 000 000 g/mol, preferably up to 2 000 000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and in particular 1,3-dioxolane.

Examples of suitable acyclic organic carbonates are dimethyl carbonate, ethyl methyl carbonate and diethyl carbonate.

Examples of suitable cyclic organic carbonates are compounds according to the general formulae (II) and (III)

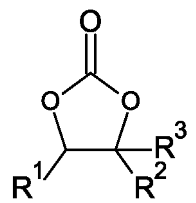

(II)

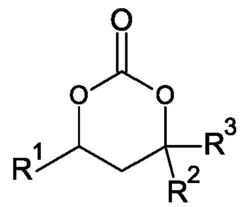

(III)

where $R^1$, $R^2$ and $R^3$ can be identical or different and are selected from among hydrogen and $C_1$-$C_4$-alkyl, for example methyl, ethyl, n-propyl, isopropyl, n-butyl, isobutyl, sec-butyl and tert-butyl, with $R^2$ and $R^3$ preferably not both being tert-butyl.

In particularly preferred embodiments, $R^1$ is methyl and $R^2$ and $R^3$ are each hydrogen, or $R^1$, $R^2$ and $R^3$ are each hydrogen. In another embodiment, $R^1$ is fluorine and $R^2$ and $R^3$ are each hydrogen.

Another preferred cyclic organic carbonate is vinylene carbonate, formula (IV).

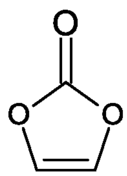

(IV)

The solvent or solvents is/are preferably used in the water-free state, i.e. with a water content in the range from 1

ppm to 0.1% by weight, which can be determined, for example, by Karl-Fischer titration.

Electrolyte further comprises at least one electrolyte salt. Suitable electrolyte salts are, in particular, lithium salts. Examples of suitable lithium salts are $LiPF_6$, $LiBF_4$, $LiClO_4$, $LiAsF_6$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, $LiAlCl_4$ and salts of the general formula $(C_nF_{2n+1}SO_2)_tYLi$, where m is defined as follows:

t = 1, when Y is selected from among oxygen and sulfur,
t = 2, when Y is selected from among nitrogen and phosphorus, and
t = 3, when Y is selected from among carbon and silicon.

Preferred electrolyte salts are selected from among $LiC(CF_3SO_2)_3$, $LiN(CF_3SO_2)_2$, $LiPF_6$, $LiBF_4$, $LiClO_4$, with particular preference being given to $LiPF_6$ and $LiN(CF_3SO_2)_2$.

In one embodiment of the present invention, batteries according to the invention comprise one or more separators by means of which the electrodes are mechanically separated. Suitable separators are polymer films, in particular porous polymer films, which are unreactive toward metallic lithium. Particularly suitable materials for separators are polyolefins, in particular film-forming porous polyethylene and film-forming porous polypropylene.

Separators composed of polyolefin, in particular polyethylene or polypropylene, can have a porosity in the range from 35 to 45%. Suitable pore diameters are, for example, in the range from 30 to 500 nm.

In another embodiment of the present invention, separators can be selected from among PET nonwovens filled with inorganic particles. Such separators can have porosities in the range from 40 to 55%. Suitable pore diameters are, for example, in the range from 80 to 750 nm.

Batteries according to the invention further comprise a housing which can have any shape, for example cuboidal or the shape of a cylindrical disk or a cylindrical can. In one variant, a metal foil configured as a pouch is used as housing.

Batteries according to the invention display a good discharge behavior, for example at low temperatures (zero °C or below, for example down to -10 °C or even less), a very good discharge and cycling behavior.

Batteries according to the invention can comprise two or more electrochemical cells that combined with one another, for example can be connected in series or connected in parallel. Connection in series is preferred. In batteries according to the present invention, at least one of the electrochemical cells contains at least one cathode according to the invention. Preferably, in electrochemical cells according to the present invention, the majority of the electrochemical cells contains a cathode according to the present invention. Even more preferably, in batteries according to the present invention all the electrochemical cells contain cathodes according to the present invention.

The present invention further provides for the use of batteries according to the invention in appliances, in particular in mobile appliances. Examples of mobile appliances are vehicles, for example automobiles, bicycles, aircrafts or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The present invention is further illustrated by the following working examples.

Average particle diameters (D50) were determined by dynamic light scattering ("DLS"). Percentages are % by weight unless specifically noted otherwise.

$LiOH\cdot H_2O$ was purchased from Rockwood Lithium. $SnSO_4$ was purchased from Aldrich.

Step (d) was performed in a tube furnace, type: Nabertherm model RS 80/500/13.

Unless otherwise stated, all synthesis steps were performed in a glovebox (MB200B, MBraun) under argon atmosphere with oxygen and water concentrations below 0.1 ppm.

I. Manufacture of an inventive cathode active material, CAM.1

I.1 Step (a.1): Manufacture of a non-coated electrode active material

A stirred tank reactor was filled with deionized water and tempered to 55°C. The pH value of 8.05 was adjusted by adding an aqueous sodium hydroxide solution. The co-precipitation reaction was started by simultaneously feeding an aqueous transition metal sulfate solution and aqueous sodium carbonate solution at a flow rate ratio of 1.3, and a total flow rate resulting in an average residence time of 13.5 hours. The transition metal solution contained Ni and Mn at a molar ratio of 1:2 and a total transition metal concentration of 1.65 mol/kg. The aqueous sodium carbonate solution was a 27 wt.% sodium carbonate solution. The pH value was kept at 8.05 by the separate feed of the aqueous sodium carbonate solution. Beginning with the start-up of all feeds, mother liquor was removed continuously. The resultant mixed transition metal carbonate precursor $TMCO_3$ was obtained by filtration of the resulting suspension, washing with distilled water, drying at 120°C in air and sieving.

$TMCO_3$ was mixed with $Li_2CO_3$ in a Li/(TM) molar ratio of 1.30. The mixture was heated to 930°C and kept for 5

hours in a forced flow of a mixture of 20% oxygen and 80% nitrogen by volume. After cooling to ambient temperature, the powder was deagglomerated and sieved through a 32 μm mesh to obtain a base material, B-CAM.1.

I.2 Manufacture of a coated electrode active material

Step (b.1): Treatment with an aqueous solution of $SnSO_4$

An amount of 0.14 g -3.0 wt.% of $SnSO_4$ was first dispersed in 70 ml of deionized water by sonication (using sonicator Elma model Elmasonic P 60 H) for 20 min. Then, 10 g of B.CAM (BASF) powder was added to the solution and sonicated for 10 min and then stirred at ambient temperature for 3 hours.

Step (c.1): Removal of water

Then the water was removed under vacuum at 80°C for 48 h in a Memmert (model UFE 400) oven.

Step (d.1): Thermal treatment

The powder resulting from Step (c.1) was calcined in a tube furnace (Nabertherm model RS 80/500/13). The powder was heated with a rate of 2°C/min to 500°C and was then maintained at 500◦C for 5 hours under an air atmosphere. Then the heating was switched off and the calcined powder was allowed to cool to ambient temperature. Inventive coated cathode active material CAM.1 was obtained. It contained a coating from $SnO_2$.

II. Electrochemical testing

II.1 Cathode manufacture

General procedure:

Positive electrode: PVDF binder (Solef® 5130) was dissolved in NMP (Merck) to produce a 10 wt.% solution. For electrode preparation, binder solution (3.5 wt.%), carbon black (Super C65, 4 wt.-%) were slurried in NMP. After mixing using a planetary centrifugal mixer (ARE-250, Thinky Corp.; Japan), either any of inventive CAM.1 or comparative cathode active material B-CAM.1 (92.5 wt.%) was added and the suspension was mixed again to obtain a lump-free slurry. The slurry was coated onto 15 μm thick Al foil using a Erichsen auto coater, followed by drying at 120°C for 15 minutes at ambient pressure and then at 120°C for 4 hours *in vacuo*. The loading was 8 to 10 mg/cm$^2$. All electrodes were dried at 120°C for 12 hours. Prior to further use, all electrodes were calendared.

A glass fiber separator commercially available from Whatmann was used. A lithium anode was used.

II.2 Coin cell manufacture

Coin-type half cells (20 mm in diameter and 3.2 mm in thickness) comprising a cathode prepared as described under II.1 and lithium metal as working and counter electrode, respectively, were assembled and sealed in an Ar-filled glove box. In addition, the cathode and anode and a separator were superposed in order of cathode // separator // Li foil to produce a half coin cell. Thereafter, 0.1 mL μl of electrolyte, consisting of 1.0 M $LiPF_6$ in 3:7 EC:EMC (ethylene carbonate : ethyl methyl carbonate) by weight were added.

II.3 Tests

LiB Test protocol:

In general, for every experiment, at least three cells were successfully cycled and results are shown as the average of these cells. They were cycled with a battery testing system (Landt Po-tentiostat; Landt International Inc.) at 25 °C.

Table 1: Electrochemical testing of inventive cathode active materials and of a comparative sample

| (C/5 discharge) cycle | 10th | 50th | 100th | 150th | 200th | 250th | 300th | 400th | 500th | $Q_{400}$ /$Q_{10}$ [%] |
|---|---|---|---|---|---|---|---|---|---|---|
| B-CAM.1 | 266 | 255 | 248 | 234 | 228 | 219 | 204 | 178 | 108 | 66.9 |

(continued)

| (C/5 discharge) cycle | 10th | 50th | 100th | 150th | 200th | 250th | 300th | 400th | 500th | $Q_{400}/Q_{10}$ [%] |
|---|---|---|---|---|---|---|---|---|---|---|
| CAM.1 | 262 | 239 | 239 | 241 | 241 | 248 | 248 | 239 | 219 | 91.2 |

## Claims

**1.** Process for the manufacture of a coated cathode active material comprising the steps of

(a) providing a particulate electrode active material according to general formula $Li_{1+x}TM_{1-x}O_2$, wherein TM is a combination of metals comprising Ni and Mn, and, optionally, at least one element selected from Al, Mg, transition metals other than Ni and Mn, and x is in the range of from zero to 0.35, wherein at least 50 mole-% of the metal of TM is Mn,
(b) treating said particulate electrode active material with an aqueous solution of at least one salt of $Sn^{2+}$,
(c) removing the water, thereby obtaining a solid residue,
(d) treating the residue obtained from step (c) thermally.

**2.** Process according to claim 1 wherein electrode active material provide in step (a) is according to formula $Li_{1+x}TM_{1-x}O_2$ wherein TM is a combination of metals according to general formula (I)

$$(Ni_aCo_bMn_c)_{1-d}M_d \qquad (I)$$

with

a being in the range of from 0.2 to 0.4,
b being zero or in the range of from 0.01 to 0.20,
c being in the range of from 0.55 to 0.8, and
d being in the range of from zero to 0.1,
M is at least one of Al, Mg, Ti, Mo, W, Nb and Zr, and

$$a + b + c = 1.$$

**3.** Process according to claim 1 or 2 wherein the salt of $Sn^{2+}$ added in step (b) is $SnSO_4$.

**4.** Process according to any of the preceding claims wherein step (d) includes a calcination step at a maximum temperature in the range of from 400 to 600°C.

**5.** Process according to any of preceding claims wherein step (d) includes a drying step at a maximum temperature in the range of from 40 to 250°C.

**6.** Process according to any of the preceding claims wherein the particulate electrode active material has an average particle diameter (d50) in the range of from 3 to 20 μm.

**7.** Particulate cathode active material having a core according to general formula $Li_{1+x}TM_{1-x}O_2$, wherein TM is a combination of metals comprising Ni and Mn, and, optionally, at least one element selected from Al, Mg, transition metals other than Ni and Mn, and x is in the range of from zero to 0.35, wherein at least 50 mole-% of the metal of TM is Mn, and a shell comprising $SnO_2$.

**8.** Particulate cathode active material according to claim 7 wherein the core corresponds to formula $Li_{1+x}TM_{1-x}O_2$ wherein TM is a combination of metals according to general formula (I)

$$(Ni_aCo_bMn_c)_{1-d}M_d \qquad (I)$$

with

a being in the range of from 0.2 to 0.4,

b being zero or in the range of from 0.01 to 0.20,
c being in the range of from 0.55 to 0.8, and
d being in the range of from zero to 0.1,
M is at least one of Al, Mg, Ti, Mo, W, Nb and Zr, and

$$a + b + c = 1.$$

**9.** Particulate cathode active material according to claim 7 or 8 wherein the particulate cathode active material has an average particle diameter (d50) in the range of from 3 to 20 μm.

**10.** Particulate cathode active material according to any of claims 7 to 9 wherein the shell has a thickness in the range of from 5 to 10 nm.

**11.** Cathode comprising

(A) at least one particulate cathode active material according to any of the claims 7 to 10,
(B) carbon in electrically conductive form, and
(C) a binder polymer.

**12.** Cathode according to claim 11 comprising

(A) 80 to 98 % by weight inventive cathode active material,
(B) 1 to 17 % by weight of carbon,
(C) 1 to 15 % by weight of binder polymer,

percentages referring to the sum of (A), (B) and (C).

**13.** Electrochemical cell comprising at least one cathode according to claim 11 or 12.

**Patentansprüche**

**1.** Verfahren zur Herstellung eines beschichteten Kathodenaktivmaterials, umfassend die Schritte

(a) Bereitstellen eines aktiven Materials aus Partikelelektrode gemäß der allgemeinen Formel $Li_{1+x}TM_{1-x}O_2$, wobei TM eine Kombination von Metallen ist, die Ni und Mn umfassen, und gegebenenfalls mindestens ein Element, ausgewählt aus Al, Mg, Übergangsmetallen außer Ni und Mn, und x im Bereich von Null bis 0,35 liegt, wobei mindestens 50 Mol-% des Metalls von TM Mn ist,
(b) Behandeln des aktiven Materials der Partikelelektrode mit einer wässrigen Lösung von mindestens einem Salz von $Sn^{2+}$,
(c) Entfernen des Wassers, wodurch ein fester Rückstand entsteht,
(d) Thermische Behandlung des Rückstands aus Schritt c.

**2.** Verfahren nach Anspruch 1, wobei das in Schritt (a) bereitgestellte Elektrodenaktivmaterial gemäß der Formel $Li_{1+x}TM_{1-x}O_2$ vorliegt, wobei TM eine Kombination von Metallen gemäß der allgemeinen Formel (I) ist

$$(Ni_aCo_bMn_c)_{1-d}M_d \qquad (I)$$

mit

a im Bereich von 0,2 bis 0,4 liegt,
b Null ist oder im Bereich von 0,01 bis 0,20 liegt,
c im Bereich von 0,55 bis 0,8 liegt und
d im Bereich von Null bis 0,1 liegt,
M mindestens eines von Al, Mg, Ti, Mo, W, Nb und Zr ist und

$$a + b + c = 1.$$

3. Verfahren nach Anspruch 1 oder 2, wobei das Salz von Sn2+, das in Schritt (b) zugegeben wurde, $SnSO_a$ ist.

4. Verfahren nach einem der vorhergehenden Ansprüche, wobei Schritt (d) einen Kalzinierungsschritt bei einer maximalen Temperatur im Bereich von 400 bis 600 °C umfasst.

5. Verfahren nach einem der vorhergehenden Ansprüche, wobei Schritt (d) einen Trocknungsschritt bei einer maximalen Temperatur im Bereich von 40 bis 250 °C umfasst.

6. Verfahren nach einem der vorhergehenden Ansprüche, wobei das aktive Material der Partikelelektrode einen durchschnittlichen Partikeldurchmesser (d50) im Bereich von 3 bis 20 μm aufweist.

7. Partikuläres Kathodenaktivmaterial mit einem Kern nach der allgemeinen Formel $Li_{1+x}TM_{1-x}O_2$, wobei TM eine Kombination von Metallen ist, die Ni und Mn umfassen, und gegebenenfalls mindestens ein Element, ausgewählt aus Al, Mg, Übergangsmetallen außer Ni und Mn, und x im Bereich von Null bis 0,35 liegt, wobei mindestens 50 Mol-% des Metalls von TM Mn ist, und eine Hülle, die $SnO_2$ umfasst.

8. Partikuläres Kathodenaktivmaterial nach Anspruch 7, wobei der Kern der Formel $Li_{1+x}TM_{1-x}O_2$ entspricht, wobei TM eine Kombination von Metallen nach der allgemeinen Formel (I) ist

$$(Ni_aCo_bMn_c)_{1-d}M_d \qquad (I)$$

mit

a im Bereich von 0,2 bis 0,4 liegt,
b Null ist oder im Bereich von 0,01 bis 0,20 liegt,
c im Bereich von 0,55 bis 0,8 liegt und
d im Bereich von Null bis 0,1 liegt,
M mindestens eines von Al, Mg, Ti, Mo, W, Nb und Zr ist und

$$a + b + c = 1.$$

9. Partikuläres Kathodenaktivmaterial nach Anspruch 7 oder 8, wobei das partikuläre Kathodenaktivmaterial einen durchschnittlichen Partikeldurchmesser (d50) im Bereich von 3 bis 20 μm aufweist.

10. Partikuläres Kathodenaktivmaterial nach einem der Ansprüche 7 bis 9, wobei die Hülle eine Dicke im Bereich von 5 bis 10 nm aufweist.

11. Kathode enthaltend

(A) mindestens ein partikuläres Kathodenaktivmaterial nach einem der Ansprüche 7 bis 10,
(B) Kohlenstoff in elektrisch leitfähiger Form und
(C) ein Bindemittelpolymer.

12. Kathode nach Anspruch 11 mit

(A) 80 bis 98 Gew.-% erfindungsgemäßes Kathodenaktivmaterial,
(B) 1 bis 17 Gew.-% Kohlenstoff,
(C) 1 bis 15 Gew.-% Bindemittelpolymer,

wobei sich die Prozentsätze auf die Summe von (A), (B) und (C) beziehen.

13. Elektrochemische Zelle mit mindestens einer Kathode nach Anspruch 11 oder 12.

## Revendications

1. Procédé de fabrication d’un matériau actif de cathode revêtu comprenant les étapes

(a) fournissant un matériau actif d'électrode particulaire selon la formule générale $Li_{1+x}TM_{1-x}O_2$, dans lequel TM est une combinaison de métaux comprenant Ni et Mn, et, éventuellement, au moins un élément choisi parmi Al, Mg, métaux de transition autres que Ni et Mn, et x est compris entre zéro et 0,35, dans lequel au moins 50 % molaire du métal de TM est Mn,
(b) traiter ladite matière active d'électrode particulaire avec une solution aqueuse d'au moins un sel de Sn2+,
(c) l'élimination de l'eau, obtenant ainsi un résidu solide,
(d) Traitement thermique du résidu obtenu à l'étape (c).

**2.** Procédé selon la revendication 1, dans lequel le matériau actif de l'électrode fourni à l'étape (a) est selon la formule $Li_{1+x}TM_{1-x}O_2$, dans lequel TM est une combinaison de métaux selon la formule générale (I)

$$(Ni_aCo_bMn_c)_{1-d}M_d \quad (I)$$

avec

a étant compris entre 0,2 et 0,4,
b étant égal à zéro ou compris entre 0,01 et 0,20,
c étant compris entre 0,55 et 0,8, et
d étant dans la gamme de zéro à 0,1,
M est au moins l'une des valeurs suivantes : Al, Mg, Ti, Mo, W, Nb et Zr, et

$$a + b + c = 1.$$

**3.** Procédé selon la revendication 1 ou 2, dans lequel le sel de Sn2+ ajouté à l'étape (b) est du $SnSO_4$.

**4.** Procédé selon l'une quelconque des revendications précédentes, dans lequel l'étape (d) comprend une étape de calcination à une température maximale dans la plage de 400 à 600°C.

**5.** Procédé selon l'une quelconque des revendications précédentes, dans lequel l'étape (d) comprend une étape de séchage à une température maximale comprise entre 40 et 250°C.

**6.** Procédé selon l'une quelconque des revendications précédentes, dans lequel le matériau actif de l'électrode particulaire a un diamètre moyen de particule (d50) dans la plage de 3 à 20 μm.

**7.** Matériau actif de cathode particulaire ayant un noyau selon la formule générale $Li_{1+x}TM_{1-x}O_2$, dans lequel TM est une combinaison de métaux comprenant Ni et Mn, et, éventuellement, au moins un élément choisi parmi Al, Mg, métaux de transition autres que Ni et Mn, et x est compris entre zéro et 0,35, dans lequel au moins 50 % molaire du métal de TM est Mn, et une coquille comprenant du $SnO_2$.

**8.** Matériau actif de cathode particulaire selon la revendication 7, dans lequel le noyau correspond à la formule $Li_{1+x}TM_{1-x}O_2$, dans lequel TM est une combinaison de métaux selon la formule générale (I)

$$(Ni_aCo_bMn_c)_{1-d}M_d \quad (I)$$

avec

a étant compris entre 0,2 et 0,4,
b étant égal à zéro ou compris entre 0,01 et 0,20,
c étant compris entre 0,55 et 0,8, et
d étant dans la gamme de zéro à 0,1,
M est au moins l'une des valeurs suivantes : Al, Mg, Ti, Mo, W, Nb et Zr, et

$$a + b + c = 1.$$

**9.** Matériau actif de cathode particulaire selon la revendication 7 ou 8, dans lequel le matériau actif de cathode particulaire a un diamètre moyen de particule (d50) dans la plage de 3 à 20 μm.

**10.** Matériau actif de cathode particulaire selon l'une quelconque des revendications 7 à 9, dans lequel la coque a une épaisseur comprise entre 5 et 10 nm.

**11.** Cathode comprenant

(A) au moins un matériau actif de cathode particulaire selon l'une quelconque des revendications 7 à 10,
(B) carbone sous forme conductrice d'électricité, et
(C) un polymère liant.

**12.** Cathode selon la revendication 11, comprenant

(A) 80 à 98 % en poids de matière active de cathode inventive,
(B) 1 à 17 % en poids de carbone,
(C) 1 à 15 % en poids de polymère liant,

pourcentages se rapportant à la somme des points (A), (B) et (C).

**13.** Pile électrochimique comportant au moins une cathode selon la revendication 11 ou 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3486980 A

### Non-patent literature cited in the description

- **MA FENG et al.** Facile synthesis and characterization of a SnO 2 -modified LiNi 0.5 Mn 1.5 O 4 high-voltage cathode material with superior electrochemical performance for lithium ion batteries. *PHYSICAL CHEMISTRY CHEMICAL PHYSICS*, 01 January 2017, vol. 19 (15), 9983-9991